# EUROPEAN PATENT APPLICATION

(11) **EP 4 451 593 A1**
(43) Date of publication of application: **23.10.2024**
(21) Application number: 22927701.7
(22) Date of filing: 24.02.2022
(51) Int. Cl.: H04L 1/18

(54) **COMMUNICATION METHOD AND DEVICE, STORAGE MEDIUM, AND COMPUTER PROGRAM PRODUCT**

(71) Applicant: Huawei Technologies Co., Ltd., Shenzhen, Guangdong 518129 (CN)
(72) Inventor: YAO, Jing, Shenzhen, Guangdong 518129 (CN); XIE, Zichen, Shenzhen, Guangdong 518129 (CN); WANG, Rong, Shenzhen, Guangdong 518129 (CN)
(74) Representative: Goddar, Heinz J.
(86) International application number: PCT/CN2022/077566
(87) International publication number: WO 2023/159410

(57) **Abstract**

Embodiments of the present disclosure relate to a short-range wireless communication method and device, a storage medium, and a computer program product. The method proposed herein includes: A receiving device and a sending device broadcast a data packet; the sending device performs, at a predetermined time point within a time periodicity associated with the broadcasting of the data packet and in a predetermined frequency range, detection on response information fed back by at least one receiving device based on reception of the data packet, where the response information indicates at least a message that the data packet is not successfully received by any one of the at least one receiving device; and the sending device retransmits the data packet if the response information is obtained through detection. Because an acknowledgment mechanism provided according to embodiments of the present disclosure is introduced, a quantity of retransmissions can be effectively reduced and air interface bandwidth and power consumption of a transmit end can be reduced.

## Description

### TECHNICAL FIELD

Embodiments of the present disclosure generally relate to the field of communication technologies, and more specifically, to a short-range wireless communication method and device, a storage medium, and a computer program product.

### BACKGROUND

A short-range wireless communication technology is a technology for wireless transmission of data in a relatively small range. The short-range wireless communication technology usually covers a range from several meters to hundreds of meters. Common short-range wireless communication technologies include a Bluetooth (Bluetooth, BT) technology, a wireless high-fidelity (Wi-Fi) technology, a near field communication (Near Field Communication, NFC) technology, and the like. In a short-range wireless communication scenario, a data sending party is often required to simultaneously send same data information to a plurality of receiving parties.

### SUMMARY

In general, example embodiments of the present disclosure propose a short-range wireless communication method and device, a computer-readable storage medium, and a computer program product.

According to a first aspect of the present disclosure, a short-range wireless communication method is proposed. In this method, a sending device broadcasts a data packet. The sending device performs, at a predetermined time point within a time periodicity associated with the broadcasting of the data packet and in a predetermined frequency range, detection on response information fed back by at least one receiving device based on reception of the data packet, where the response information indicates at least a message that the data packet is not successfully received by any one of the at least one receiving device. The sending device retransmits the data packet if the response information is obtained through detection.

In a first implementation of the first aspect, the receiving device may perform detection on a received power level that is at the predetermined time point and in the predetermined frequency range, and determine, if determining that the received power level exceeds a threshold power level, that the response information is obtained through detection.

In a second implementation of the first aspect, the receiving device may parse at least one another data packet received at the predetermined time point and in the predetermined frequency range and determine the detection of the response information based on a result of the parsing.

In a third implementation of the first aspect, the receiving device may determine, if determining that a predetermined synchronization sequence code is received at the predetermined time point and in the predetermined frequency range, that the response information is received from the at least one receiving device.

In a fourth implementation of the first aspect, the receiving device may stop the transmission of the data packet if determining that the response information is not received at the predetermined time point and in the predetermined frequency range.

In a fifth implementation of the first aspect, the short-range wireless communication may include one of the following: Bluetooth communication, green tooth communication, mobile hotspot (Wi-Fi) communication, or Zigbee (Zigbee) communication.

According to the method provided in the first aspect of the present disclosure, because an acknowledgment mechanism is introduced, a quantity of retransmissions can be effectively reduced, and air interface bandwidth and power consumption of a transmit end can be reduced.

According to a second aspect of the present disclosure, a short-range wireless communication method is proposed. In this method, a receiving device receives a data packet. The receiving device sends response information at a predetermined time point within a time periodicity associated with the broadcasting of the data packet and in a predetermined frequency range if determining that the data packet is not successfully received, where the response information indicates at least a message that the data packet is not successfully received by any one of at least one receiving device.

According to the method proposed in the second aspect of the present disclosure, the receiving device sends the response information indicating that the data packet is not successfully received only if the data packet is not successfully received. On one hand, signaling overheads are reduced at the receive end; on the other hand, a quantity of retransmissions at the transmit end can be reduced, thereby reducing air interface bandwidth and power consumption of the transmit end.

According to a third aspect of the present disclosure, a receiving device is proposed. The receiving device includes at least one processor and at least one memory including computer program code. The at least one memory and the computer program code may work with the at least one processor to enable the at least one processor to perform the method according to the first aspect of the present disclosure.

According to a fourth aspect of the present disclosure, a sending device is proposed. The sending device includes at least one processor and at least one memory including computer program code. The at least one memory and the computer program code may work with the at least one processor to enable the at least one processor to perform the method according to the second aspect of the present disclosure.

According to a fifth aspect of the present disclosure, a computer-readable storage medium is provided. The computer-readable storage medium stores computer-executable instructions. When executed by a processor, the computer-executable instructions enable the processor to perform the method according to the first aspect or the second aspect of the present disclosure.

According to a sixth aspect of the present disclosure, a computer program product is proposed. The computer program product includes computer-executable instructions. When executed by a processor, the computer-executable instructions enable the processor to perform the method according to the first aspect or the second aspect of the present disclosure.

According to a seventh aspect of the present disclosure, a communication apparatus is proposed. The communication apparatus includes a transceiver unit and a processing unit. The transceiver unit is configured to broadcast a data packet and retransmit the data packet if response information is obtained through detection. The processing unit is configured to perform, at a predetermined time point within a time periodicity associated with the broadcasting of the data packet and in a predetermined frequency range, detection on response information fed back by at least one receiving device based on reception of the data packet. The response information indicates at least a message that the data packet is not successfully received by any one of the at least one receiving device.

In a first implementation of the seventh aspect, the processing unit is further configured to perform detection on a received power level that is at the predetermined time point and in the predetermined frequency range; and determine, if determining that the received power level exceeds a threshold power level, that the response information is obtained through detection.

In a second implementation of the seventh aspect, the processing unit is further configured to parse at least one another data packet received at the predetermined time point and in the predetermined frequency range and determine the detection of the response information based on a result of the parsing.

In a third implementation of the seventh aspect, the processing unit is further configured to determine, if determining that a predetermined synchronization sequence code is received at the predetermined time point and in the predetermined frequency range, that the response information is received from the at least one receiving device.

In a fourth implementation of the seventh aspect, the processing unit is further configured to stop the transmission of the data packet if determining that the response information is not received at the predetermined time point and in the predetermined frequency range.

In a fifth implementation of the seventh aspect, the short-range wireless communication may include one of the following: Bluetooth communication, green tooth communication, mobile hotspot (Wi-Fi) communication, or Zigbee (Zigbee) communication.

According to an eighth aspect of the present disclosure, a communication apparatus is proposed. The communication apparatus includes a transceiver unit and a processing unit. The transceiver unit receives a data packet, and sends response information at a predetermined time point within a time periodicity associated with the broadcasting of the data packet and in a predetermined frequency range if it is determined that the data packet is not successfully received, where the response information indicates at least a message that the data packet is not successfully received by any one of at least one receiving device.

According to a ninth aspect of the present disclosure, a communication apparatus is provided, including at least one processor, where the at least one processor is configured to execute a computer program or instructions in a memory, to enable the communication apparatus to perform the method according to embodiments of the first aspect or the second aspect.

According to a tenth aspect of the present disclosure, a communication apparatus is provided, including a processor, a transceiver, and a memory, where the processor is configured to execute a computer program or instructions in the memory, to enable the communication apparatus to perform the method according to embodiments of the first aspect or the second aspect.

According to an eleventh aspect of the present disclosure, a communication apparatus is provided, including a processor and a memory, where the processor is configured to execute a computer program or instructions in the memory, to enable the communication apparatus to perform the method according to embodiments of the first aspect or the second aspect.

According to a twelfth aspect of the present disclosure, another communication apparatus is provided, including an interface circuit and a logic circuit, where interface circuit may be understood as an input/output interface, and the logic circuit may be configured to run code instructions to perform the method in embodiments of the first aspect or the second aspect.

### BRIEF DESCRIPTION OF DRAWINGS

The foregoing and other features, advantages, and aspects of embodiments of the present disclosure become more apparent in combination with the accompanying drawings and with reference to the following detailed description. In the accompanying drawings, the same or similar reference numerals indicate the same or similar elements.
FIG. 1 is a schematic diagram of an example network environment in which example embodiments of the present disclosure may be implemented;
FIG. 2 is a signaling interaction diagram for short-range wireless communication according to an example embodiment of the present disclosure;
FIG. 3 is a schematic diagram of an example process of short-range wireless communication according to an example embodiment of the present disclosure;
FIG. 4 is a flowchart of a method for short-range wireless communication according to an example embodiment of the present disclosure;
FIG. 5 is a flowchart of a method for short-range wireless communication according to an example embodiment of the present disclosure;
FIG. 6 is a block diagram of a communication apparatus according to an example embodiment of the present disclosure;
FIG. 7 is a block diagram of a communication apparatus according to an example embodiment of the present disclosure;
FIG. 8 is a block diagram of a communication apparatus according to an example embodiment of the present disclosure; and
FIG. 9 is a block diagram of a communication apparatus according to an example embodiment of the present disclosure.

### DESCRIPTION OF EMBODIMENTS

The following describes some example embodiments with reference to the accompanying drawings. Although some embodiments of the present disclosure are shown in the accompanying drawings, it should be understood that the present disclosure may be implemented in various forms, and should not be construed as being limited to embodiments described herein. On the contrary, these embodiments are provided so that the present disclosure is thoroughly and completely understood. It should be understood that the accompanying drawings and embodiments of the present disclosure are merely used as examples, but are not intended to limit the protection scope of the present disclosure.

The terms "communication network" and "wireless network" used in this specification refer to a network that complies with any appropriate communication standard, such as long term evolution (LTE), advanced LTE (LTE-A), wideband code division multiple access (WCDMA), and high speed packet access (HSPA). In addition, communication between a terminal device and an access network device in a communication network may be performed according to any proper first generation communication protocol, including but not limited to a first generation (1G), a second generation (2G), 2.5G, 2.75G, a third generation (3G), a fourth generation (4G), 4.5G, and a fifth generation (5G) communication protocol, and/or any other protocol that is currently known or to be developed in the future. Embodiments of the present disclosure may be applied to various communication systems, including cellular and non-cellular communication systems. In view of the rapid development of communications, certainly, there will also be a future type of communication technology and system that can reflect the present disclosure. Therefore, the scope of the present disclosure should not be considered to be limited to the systems described above. For the purpose of illustration, embodiments of the present disclosure are described with reference to a 5G communication system.

Terms "terminal device" and "user equipment" used in this specification refer to any terminal device that can perform wireless communication. As an illustrative but non-limiting example, the terminal device may also be referred to as a communication device, user equipment (UE), a subscriber station (SS), a portable subscriber station, a mobile station (MS), or an access terminal (AT). The terminal device may include but is not limited to a mobile phone, a cellular phone, a smartphone, an IP voice (VoIP) phone, a wireless local loop phone, a tablet computer, a wearable terminal device, a personal digital assistant (PDA), a portable computer, a desktop computer, an image capture terminal device (for example, a digital camera), a game terminal device, a music storage and playing device, a vehicle-mounted wireless terminal device, a wireless endpoint, a mobile station, laptop embedded equipment (LEE), laptop mounted equipment (LME), a USB dongle, a smart device, wireless customer premises equipment (CPE), an internet of things (IoT) device, a watch or another wearable device, a head mounted display (HMD), a vehicle, an unmanned aerial vehicle, a medical device and application (for example, remote surgery), an industrial device and application (for example, a robot and/or another wireless device operating in an industrial and/or automated processing chain environment), a consumer electronic device, a commercial operation of device and/or industrial wireless network, and the like. In the following description, terms "terminal device", "communication device", "terminal", "user equipment", and "UE" may be used interchangeably.

The term "access network device" used in this specification includes but is not limited to a base station (BS), a gateway, a registration management entity, and another suitable device in a communication system. The term "base station" or "BS" represents a NodeB (NodeB or NB), an evolved NodeB (eNodeB or eNB), an NR (new radio) NB (also referred to as gNB), a remote radio unit (RRU), a radio head (RH), a remote radio head (RRH), a relay, a low power node (for example, a femto or a pico). In addition, the "access network device" may be a central unit (Central Unit, CU) or a distributed unit (Distributed Unit, DU). In some example embodiments, the CU and the DU may be placed in different locations, for example, the CU is placed in a central equipment room while the DU is placed in a high-traffic area. In some other example embodiments, the CU and the DU may alternatively be placed at a same location, for example, in different components in a same equipment room or a same rack.

The term "include" and variants thereof used in this specification indicate open inclusion, that is, "include but is not limited to". Unless otherwise specified, the term "or" indicates "and/or". The term "based on" means "at least partially based on". The terms "example embodiments" and "some embodiments" represent "at least one example embodiment". Other explicit and implicit definitions may also be included below.

As mentioned above, the short-range wireless communication technology is a technology for wireless transmission of data in a relatively small range. The short-range wireless communication technology usually covers a range from several meters to hundreds of meters. In a short-range wireless communication scenario, a data sending party is often required to simultaneously send same data information to a plurality of receiving parties. One scheme for one-to-many data transmission in an existing short-range wireless communication protocol is broadcast. In a broadcasting scheme, a transmit end sends data at a specific frequency and in a specific modulation mode at specific time, and all receive ends in a transmission range may receive the data at same specific time. The transmit end may repeatedly send a same data packet for several times until a maximum quantity of sending times that can be allowed for the data packet is reached. In a sending process, the transmit end does not receive a feedback from the receive end, and the receive end does not send any acknowledgment information, about a reception feedback of a data packet, of the receive end.

In a data broadcast transmission mode, the transmit end completely cannot determine a receiving status of a receiving party because no data reception acknowledgment mechanism is configured at both the transmit end and the receive end at all. Even if a quantity of receive ends is relatively small, path environments are relatively few, and a reception success rate is quite high, sending still needs to be performed based on a predetermined maximum quantity of allowed sending times. Consequently, air interface occupation time of the transmit end is relatively long, and power consumption is relatively high.

In addition, for a short-range wireless communication scenario, a broadcasting scheme for one-to-many data transmission configured with an acknowledgment mechanism has been proposed. In the broadcasting scheme configured with an acknowledgment mechanism, a transmit end sends data at a specific frequency and in a specific modulation mode at specific time, and all receive ends in a transmission range may receive the data at same specific time. After completing sending once, the transmit end sequentially receives acknowledgment information, about a reception feedback of a current data packet, of all the receive ends. The transmit end may stop sending the data packet after all the receive ends feed back a reception success of the data packet. If no reception success feedback of a specific receive end is received, the data packet is repeatedly sent until reception success feedbacks of all the receive ends are received, or a specified maximum quantity of sending times is reached. In a broadcast with an acknowledgment, feedback acknowledgment time of all receive ends needs to be reserved on an air interface.

A disadvantage of this scheme is that air interface sending time needs to be reserved for each acknowledgment feedback of a receive end. If there are a large quantity of receiving devices, a large quantity of air interfaces need to be reserved for receiving acknowledgment feedback information. If there are a large quantity of receive ends and a path environment is relatively good, relatively many air interfaces are wasted for acknowledgment feedback.

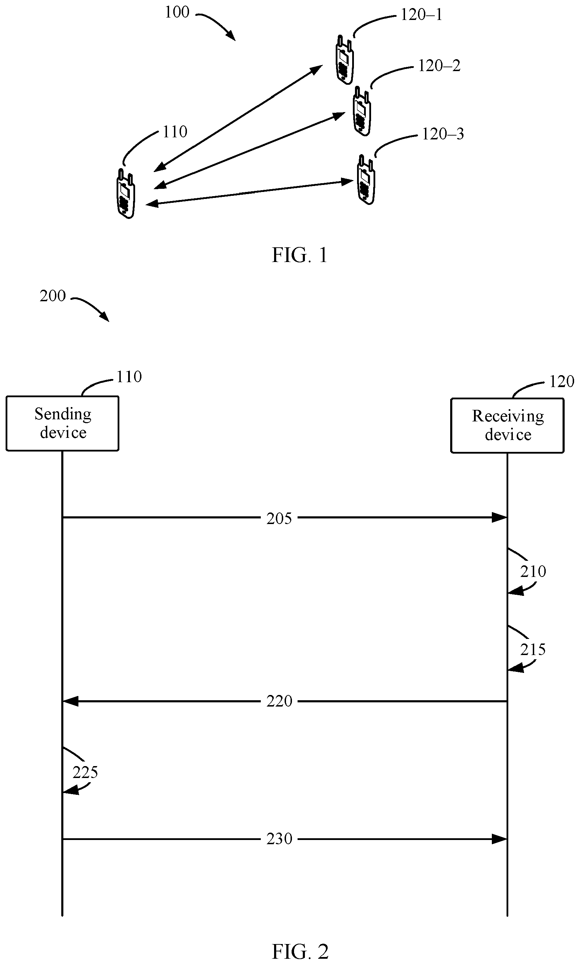

An example process for short-range wireless communication according to embodiments of the present disclosure is discussed below with reference to FIG. 1 to FIG. 5.

FIG. 1 is a schematic diagram of an example network environment 100 in which example embodiments of the present disclosure may be implemented. As shown in FIG. 1, a network environment 100 may include a device 110 that can implement short-range wireless communication transmission. In some embodiments, the device 110 may be referred to as a sending device 110 in short-range wireless communication. The network environment 100 may include a device 120-1, a device 120-2, and a device 120-3 that can implement short-range wireless communication transmission. In some embodiments, the device 120-1, the device 120-2, and the device 120-3 may be referred to as a receiving device 120-1, a receiving device 120-2, and a receiving device 120-3 in short-range wireless communication. In some embodiments, the device 120-1, the device 120-2, and the device 120-3 may also be collectively referred to as a receiving device 120. The device 110 may communicate with the device 120-1, the device 120-2, and the device 120-3.

It should be understood that roles of the device 110 and the device 120 may alternatively be interchanged, that is, the device 120 is used as a sending device in short-range wireless communication, and the device 110 is used as a receiving device in short-range wireless communication. In the following, for ease of description, the device 110 is considered as a sending device 110 in short-range wireless communication, and the device 120 is considered as a receiving device 120 in short-range wireless communication.

In the network environment 100, the device 110 and the device 120 may include but are not limited to a mobile phone, a cellular phone, a smartphone, a tablet computer, a tablet phone, a computer, a portable computer, a desktop computer, a personal digital assistant (PDA), a monitor, a computer monitor, a television, a tuner, an entertainment unit, a navigation device, a communication device, a fixed location data unit, a mobile location data unit, a radio, a satellite radio, a music player, a digital music player, a portable music player, a digital video player, a video player, a digital video disc (DVD) player, a portable digital video player, or any other appropriate device that can support short-range wireless communication.

It should be understood that the network environment 100 is used only for example purposes and does not imply any limitation on the scope of the present disclosure. Embodiments of the present disclosure may be further embodied in another network environment or architecture. In addition, it should be further understood that the network environment 100 may further include other elements or entities configured to implement a purpose of communication connection, data transmission, or the like. For simplicity of description, these elements or entities are not shown in FIG. 1, but it does not mean that embodiments of the present disclosure do not have these elements or entities.

The network environment 100 according to embodiments of the present disclosure may be a wireless network complying with any currently known protocol or any protocol to be developed in the future, including but not limited to a narrowband internet of things (Narrowband Internet of Things, NB-IoT) system, a global system for mobile communications (Global System for Mobile Communications, GSM), an enhanced data rate for GSM evolution (Enhanced Data rate for GSM Evolution, EDGE) system, a wideband code division multiple access (Wideband Code Division Multiple Access, WCDMA) system, a code division multiple access 2000 (Code Division Multiple Access, CDMA2000) system, a time division-synchronous code division multiple access (Time Division-Synchronous Code Division Multiple Access, TD-SCDMA) system, a long term evolution system (Long Term Evolution, LTE), and three major application scenarios, namely, eMBB, URLLC, and eMTC, of a 5G mobile communications system.

As described above, the sending device 110 broadcasts a data packet in the network environment 100. It is assumed that the receiving device 120-1, the receiving device 120-2, and the receiving device 120-3 are all within a transmission range of the sending device 110, and the receiving device 120-1, the receiving device 120-2, and the receiving device 120-3 may receive the data packet. In some embodiments, none of the receiving device 120-1, the receiving device 120-2, and the receiving device 120-3 sends any acknowledgment information about a reception feedback of the data packet. The receiving device 110 continuously retransmits the data packet until a maximum quantity of allowed sending times is reached. In this scenario, the sending device 110 completely cannot determine receiving statuses of the receiving device 120-1, the receiving device 120-2, and the receiving device 120-3, for example, even if a reception success rate is quite high, the sending device 110 still needs to perform sending based on a predetermined maximum quantity of allowed sending times. Consequently, air interface occupation time of the transmit end is relatively long, and power consumption is relatively high.

However, in some embodiments, the receiving device 120-1, the receiving device 120-2, and the receiving device 120-3 respond to each data packet transmission of the sending device 110, to feed back on whether the data packet is successfully received. The receiving device 110 terminates transmission of the data packet after receiving acknowledgment information indicating that the data packet is successfully received from all receiving devices or when the maximum quantity of allowed sending times is reached. In this scenario, feedback acknowledgment time of all the receiving devices needs to be reserved on an air interface. If there are a large quantity of receiving devices and a path environment is relatively good, relatively many air interfaces are wasted for acknowledgment feedback.

Therefore, an embodiment of the present disclosure provides a method for short-range wireless communication. In this method, a sending device broadcasts a data packet, and performs, at a predetermined time point within a time periodicity associated with the broadcasting of the data packet and in a predetermined frequency range, detection on response information fed back by at least one receiving device based on reception of the data packet, where the response information indicates at least a message that the data packet is not successfully received by any one of the at least one receiving device. The sending device retransmits the data packet if the response information is obtained through detection. In this manner, because the acknowledgment mechanism provided in embodiments of the present disclosure is introduced, a quantity of retransmissions can be effectively reduced, and air interface bandwidth and power consumption of the transmit end can be reduced.

FIG. 2 is a signaling interaction diagram of a process 200 for short-range wireless communication according to an example embodiment of the present disclosure. The example interaction process 200 may involve a sending device 110 and a receiving device 120 as shown in FIG. 1. For purposes of discussion, the process 200 is described below with reference to FIG. 1, but it should be understood that the process is also applicable to another communication scenario and device.

It should be understood that, if there are a plurality of receiving devices, such as the receiving device 120-1, the receiving device 120-2, and the receiving device 120-3 shown in FIG. 1 and shown in FIG. 2, actions described below with respect to the receiving device 120 in connection with FIG. 2 may be implemented at each of the receiving device 120-1, the receiving device 120-2, and the receiving device 120-3.

As shown in FIG. 2, at 205, the sending device 110 broadcasts a data packet to the receiving device 120. The receiving device 120 may listen to the broadcast at a predetermined time point associated with the broadcasting of the current data packet to receive data. It should be understood that if there are a plurality of receiving devices, such as the receiving device 120-1, the receiving device 120-2, and the receiving device 120-3 shown in FIG. 1, these receiving devices may listen to the broadcast at the same predetermined time point to receive data.

It should be understood that the sending device 110 may broadcast the data packet by using a plurality of different short-range communication methods. The short-range communication methods include but are not limited to Bluetooth communication, green tooth communication, mobile hotspot (Wi-Fi) communication, or Zigbee communication. In addition to the listed short-range communication technologies, another suitable short-range communication technology is also included in the protection scope of the present disclosure.

At 210, the receiving device 120 may detect whether the data packet is successfully received by the receiving device 120. The "detecting whether the data packet is successfully received" herein may involve, for example, detecting whether the data packet is completely received, or detecting whether content included in the data packet can be successfully parsed by the receiving device.

The receiving device 120 does not perform any receiving feedback operation for transmission of the current data packet if the receiving device 120 learns through detection that the data packet is already successfully received by the receiving device 120. The receiving device generates response information at 215 if the receiving device 120 learns through detection that the data packet is not successfully received by the receiving device 120. The response information is information fed back based on a receiving status, that is, unsuccessful receiving, of the data packet. The response information may indicate a message that the data packet is not successfully received by the receiving device, and may include, for example, a negative acknowledgment (non-acknowledge, NACK) message.

The receiving device 120 may send the response information to the sending device 110 at 220 after generating the response information. The response information may be sent at a predetermined time point within a time periodicity associated with the sending, by the sending device 110, the broadcasting of the current data packet and in a predetermined frequency range. The predetermined time point within the time periodicity associated with the sending, by the sending device 110, the broadcasting of the current data packet may be a predetermined time point that is after the sending device 110 sends the data packet and before the time periodicity associated with the broadcasting of the current data packet ends. The predetermined time point may be considered as a time interval configured for sending performed by the receiving device 120 to feed back a receiving status of the data packet. It should be understood that the predetermined time point may be known in advance or preconfigured by the sending device 110 and the receiving device 120 before sending of the current data packet.

It should be understood that, in this specification, the predetermined frequency range may be known in advance or preconfigured by the sending device 110 and the receiving device 120 before sending of the current data packet.

In some embodiments, the predetermined time point and the predetermined frequency range may comply with a protocol rule related to short-range communication used between the sending device 110 and the receiving device 120. For example, when the used short-range communication belongs to Bluetooth communication, green tooth communication, mobile hotspot (Wi-Fi) communication, or Zigbee communication, the predetermined time point and the predetermined frequency range may comply with a frequency hopping rule that matches the foregoing short-range communication.

It should be understood that, if there are a plurality of receiving devices, such as the receiving device 120-1, the receiving device 120-2, and the receiving device 120-3 shown in FIG. 1, the plurality of receiving devices may send response information including a message that the data packet is not successfully received by the receiving device 120 at the same predetermined time point and within the same predetermined frequency range.

At 225, the sending device 110 may detect, at the predetermined time point in the predetermined frequency range, whether response information indicating that the data packet is not successfully received by the receiving device 120 is received.

In some embodiments, the sending device 110 may perform detection on a received power level that is at the predetermined time point and in the predetermined frequency range. If the receiving device 110 determines that the received power level obtained through detection exceeds a threshold power level, the sending device 110 may determine that the response information indicating that the data packet is not successfully received by the receiving device 120 is received and determine that the previously sent data packet is not successfully received by at least one receiving device.

In some embodiments, the sending device 110 may detect content information of the data packet received at the predetermined time point and in the predetermined frequency range. For example, content information of the received data packet is parsed. If determining that the content information of the data packet includes the response information indicating that the data packet is not successfully received by the receiving device 120, the sending device 110 may determine that the sent data packet is not successfully received by at least one receiving device.

In some embodiments, the sending device 110 may detect whether a predetermined synchronization sequence code is received at the predetermined time point and in the predetermined frequency range. If the sending device 110 determines that the predetermined synchronization sequence code is received at the predetermined time point and in the predetermined frequency range, the sending device 110 determines that the sent data packet is not successfully received by the at least one receiving device.

The sending device 110 may retransmit the data packet to the receiving device 120 if determining that the previously sent data packet is not successfully received by the at least one receiving device, at 230.

The sending device 110 may stop transmission of the current data packet if the sending device 110 learns through detection that the response information indicating that the data packet is not successfully received by the receiving device 120 is not received at the predetermined time point and in the predetermined frequency range. For example, the sending device 110 may continue to transmit a next data packet later.

According to the method described above, the receiving device sends the response information indicating that the data packet is not successfully received only if the data packet is not successfully received. On one hand, signaling overheads are reduced at the receive end; on the other hand, a quantity of retransmissions at the transmit end can be reduced, thereby reducing air interface bandwidth and power consumption of the transmit end.

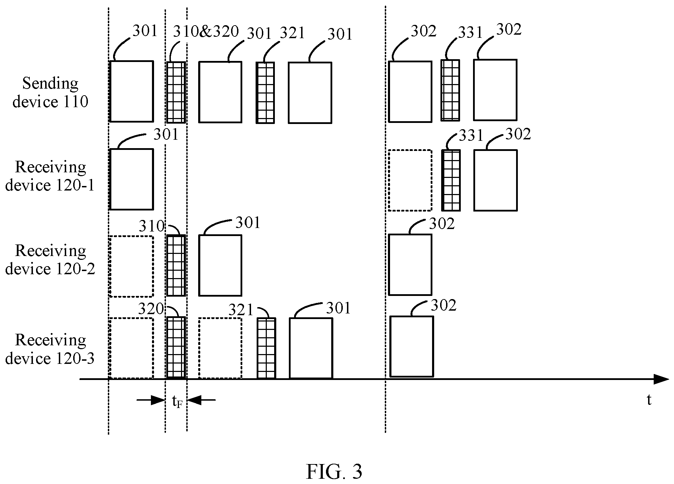

To further describe a receiving and sending process between a sending device and a plurality of receiving devices and a corresponding air interface occupation status, the following further describes a short-range wireless communication solution according to an embodiment of the present disclosure with reference to FIG. 3. FIG. 3 is a schematic diagram of an example process of short-range wireless communication according to an example embodiment of the present disclosure. The example process described with reference to FIG. 3 may relate to the sending device 110 and the receiving device 120-1, the receiving device 120-2, and the receiving device 120-3 shown in FIG. 1.

As shown in FIG. 3, the sending device 110 sends a first data packet 301. The receiving device 120-1, the receiving device 120-2, and the receiving device 120-3 may receive the first data packet 301 at same time if a transmission delay is not considered. After the first transmission of the first data packet 301, the receiving device 120-1 successfully receives the first data packet 301, but the receiving device 120-2 and the receiving device 120-3 do not successfully receive the first data packet 301.

The receiving device 120-2 and the receiving device 120-3 may feed back, at a same predetermined time point, a message, for example, a NACK message, indicating that the first data packet 301 is not successfully received. As shown in FIG. 3, the receiving device 120-2 and the receiving device 120-3 may respectively feed back, at a predetermined time point t_{F}, a message 310 and a message 320 that indicate that the first data packet 301 is not successfully received. The sending device 110 may receive, at the predetermined time point t_{F}, the message 310 indicating that the first data packet 301 is not successfully received by the receiving device 120-2 and the message 320 indicating that the first data packet 301 is not successfully received by the receiving device 120-3. It can be learned that the receiving device 120-1 that already successfully receives the first data packet 301 does not feed back any message.

Because a case in which a receiving device does not successfully receive the first data packet 301 is learned through detection, after receiving the message indicating that the first data packet 301 is not successfully received, the sending device 110 retransmits (the second transmission) the first data packet 301. After the second transmission of the first data packet 301, the receiving device 120-2 successfully receives the first data packet 301, but the receiving device 120-3 does not successfully receive the first data packet 301. The receiving device 120-3 may then feed back, at another predetermined time point associated with the second transmission of the first data packet, a message 321 indicating that the first data packet 301 is not successfully received. The sending device 110 may receive, at the predetermined time point, the message 321 indicating that the first data packet 301 is not successfully received by the receiving device 120-3.

Because a case in which the receiving device does not successfully receive the first data packet 301 is learned through detection, the sending device 110 may retransmit the first data packet 301 again (the third transmission). The receiving device 120-3 successfully receives the first data packet 301 after the third transmission of the first data packet 301.

After the third transmission of the first data packet 301, the sending device 110 may stop the transmission of the first data packet 301 because a message indicating that the receiving device does not successfully receive the first data packet 301 is not learned through detection.

The sending device 110 may continue to transmit another data packet. For example, as shown in FIG. 3, the sending device 110 may continue to transmit a second data packet 302. The receiving device 120-1, the receiving device 120-2, and the receiving device 120-3 may receive the second data packet 302 at same time if a transmission delay is not considered. After the first transmission of the second data packet 302, the receiving device 120-2 and the receiving device 120-3 successfully receive the second data packet 302, but the receiving device 120-1 does not successfully receive the second data packet 302. The receiving device 120-1 may feed back, at a predetermined time point, a message 331 indicating that the second data packet 302 is not successfully received. The sending device 110 may receive, at the predetermined time point, the message 331 indicating that the second data packet 302 is not successfully received by the receiving device 120-1. It can be learned that the receiving device 120-2 and the receiving device 120-3 that already successfully receive the second data packet 302 do not feed back any message.

Because a case in which the receiving device does not successfully receive the second data packet 302 is not learned through detection, after receiving the message indicating that the second data packet 302 is not successfully received, the sending device 110 retransmits (the second transmission) the second data packet 302. The receiving device 120-1 successfully receives the second data packet 302 after the second transmission of the second data packet 302. After the second transmission of the second data packet 302, the sending device 110 may stop the transmission of the second data packet 302 because a message indicating that any receiving device does not successfully receive the second data packet 302 is not learned through detection.

According to the description of this embodiment of the present disclosure, compared with a conventional data broadcast mode, because the data receiving acknowledgment mode proposed in the present disclosure is used, a quantity of retransmissions can be effectively reduced, and air interface bandwidth and power consumption of a transmit end can be reduced. In addition, compared with an existing broadcast mode in which an acknowledgment is configured, in the data receiving acknowledgment mode proposed in the present disclosure, only one window is required to receive a message indicating that the data packet is not successfully received, and a message indicating that the data packet is successfully received does not need to be received. Therefore, air interface consumption can be effectively reduced.

It is assumed that transmission is based on a Bluetooth protocol, a sent data packet is of 500 bytes, a sending modulation mode is 2M phy, a total quantity of sending times is set to 3, and there are 12 receive ends in total. The following shows a comparison between air interface time in an implementation proposed in the present disclosure and air interface time in the existing mode.

**FIG. 1: Air interface time comparison**

| | Sending time (µs) | Receiving time (µs) | Single air interface time (µs) | Integrated air interface time (µs) |
|---|---|---|---|---|
| Broadcasting | 4194 | 0 | 4194 | 12582 |
| Broadcasting configured with an existing acknowledgment mechanism | 4194 | 2328 | 6522 | 11935.26 |
| Broadcasting proposed in this embodiment of the present disclosure | 4194 | 194 | 4388 | 8030.04 |

If it is assumed that a single transmission has a 90% success rate, data transmission according to the implementation proposed in the present disclosure requires an average of 1.86 transmissions per data packet. Under this specified condition, 1/3 air interface time can be saved in the implementation proposed in the present disclosure compared with the existing mode.

It should be understood that, although the foregoing discussion includes specific particular implementation details, this should not be construed as limiting the scope of any invention or claim, but rather as a description of particular example embodiments that may be specific to a particular invention. Some features described in the context of separate example embodiments in this specification may alternatively be integrated into a single example embodiment. Conversely, various features that are described in the context of a single example embodiment may alternatively be implemented separately in a plurality of example embodiments or in any suitable sub-combination.

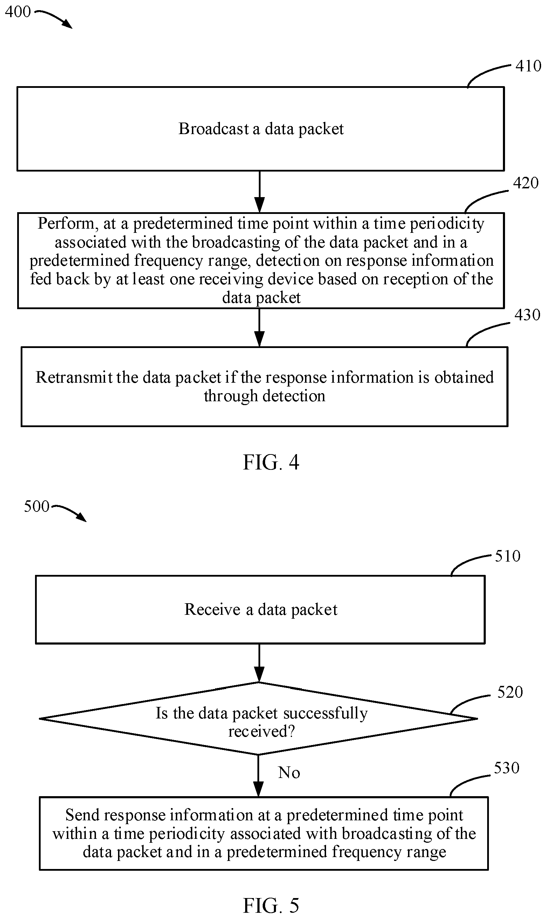

FIG. 4 is a flowchart of a method 400 for short-range wireless communication according to an example embodiment of the present disclosure. The method 400 may be implemented at the sending device 110 shown in FIG. 1, and for ease of discussion, the method 400 is described below with reference to FIG. 1. It should be understood that the method 400 is also applicable to another communication scenario and device.

At 410, the sending device 110 broadcasts a data packet.

At 420, the sending device 110 performs, at a predetermined time point within a time periodicity associated with the broadcasting of the data packet and in a predetermined frequency range, detection on response information fed back by at least one receiving device based on reception of the data packet. The response information indicates at least a message that the data packet is not successfully received by any one of the at least one receiving device.

In some example embodiments, the receiving device may perform detection on a received power level that is at the predetermined time point and in the predetermined frequency range, and determine, if determining that the received power level exceeds a threshold power level, that the response information is obtained through detection.

In some example embodiments, the receiving device may parse at least one another data packet received at the predetermined time point and in the predetermined frequency range and determine detection of the response information based on a result of the parsing.

In some example embodiments, the receiving device may determine, if determining that a predetermined synchronization sequence code is received at the predetermined time point and in the predetermined frequency range, that the response information is received from the at least one receiving device.

At 430, the sending device 110 retransmits the data packet if the response information is obtained through detection.

In some example embodiments, the receiving device may stop the transmission of the data packet if determining that the response information is not received at the predetermined time point and in the predetermined frequency range.

In some example embodiments, the short-range wireless communication may include one of the following: Bluetooth communication, green tooth communication, mobile hotspot (Wi-Fi) communication, or Zigbee communication.

FIG. 5 is a flowchart of a method 500 for short-range wireless communication according to an example embodiment of the present disclosure. The method 500 may be implemented at the receiving device 120 shown in FIG. 1, and for ease of discussion, the method 500 is described below with reference to FIG. 1. It should be understood that the method 500 is also applicable to another communication scenario and device.

The receiving device 120 receives a data packet at 510.

The receiving device 120 sends, at 530, response information at a predetermined time point within a time periodicity associated with the broadcasting of the data packet and in a predetermined frequency range if the receiving device 120 determines, at 520, that the data packet is not successfully received. The response information indicates at least a message that the data packet is not successfully received by any one of the at least one receiving device.

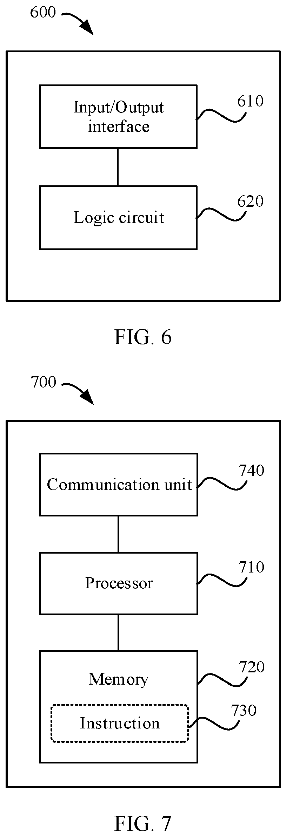

FIG. 6 is a block diagram of a communication apparatus 600 according to an example embodiment of the present disclosure. The communication apparatus 600 may be implemented as the sending device 110, the receiving device 120, a part of the foregoing device, a chip in the foregoing device, or the like shown in FIG. 1. It should be understood that the communication apparatus 600 is merely used for example purposes, and does not imply any limitation on the scope of the present disclosure. Embodiments of the present disclosure may be further embodied in different communication apparatuses. In addition, it should be further understood that the communication apparatus 600 may further include other elements, modules, or entities that are not shown for clarity, but this does not mean that embodiments of the present disclosure do not have these elements or entities. The scope of the present disclosure is not limited in this respect.

As shown in FIG. 6, the communication apparatus 600 includes an input/output interface 610 and a logic circuit 620. The input/output interface 610 is coupled to the logic circuit 620. In this embodiment of the present disclosure, the input/output interface 610 may be integrated together to implement a receiving and sending function, or may be used as an independent component to separately implement an input interface for receiving and an output interface for sending. For example, the input/output interface 610 shown in FIG. 6 is an example implementation of integration.

In an embodiment in which the communication apparatus 600 is implemented as the sending device 110 shown in FIG. 1, the input/output interface 610 may be configured to broadcast a data packet, and retransmit the data packet if response information is obtained through detection. The logic circuit 620 may be configured to perform, at a predetermined time point within a time periodicity associated with the broadcasting of the data packet and in a predetermined frequency range, detection on response information fed back by at least one receiving device based on reception of the data packet, where the response information indicates at least a message that the data packet is not successfully received by any one of the at least one receiving device.

In some example embodiments, the logic circuit 620 may be further configured as a processing unit, and is further configured to perform detection on a received power level that is at the predetermined time point and in the predetermined frequency range, and determine, if determining that the received power level exceeds a threshold power level, that the response information is obtained through detection.

In some example embodiments, the logic circuit 620 may be further configured to parse at least one another data packet received at the predetermined time point and in the predetermined frequency range and determine detection of the response information based on a result of the parsing.

In some example embodiments, the logic circuit 620 may be further configured to determine, if determining that a predetermined synchronization sequence code is received at the predetermined time point and in the predetermined frequency range, that the response information is received from the at least one receiving device.

In some example embodiments, the logic circuit 620 may be further configured to stop transmission of the data packet if determining that the response information is not received at the predetermined time point and in the predetermined frequency range.

In some example embodiments, the short-range wireless communication may include one of the following: Bluetooth communication, green tooth communication, mobile hotspot (Wi-Fi) communication, or Zigbee communication.

In an embodiment in which the communication apparatus 600 is implemented as the receiving device 120 shown in FIG. 1, the input/output interface 610 may be configured to receive a data packet, and send response information at a predetermined time point within a time periodicity associated with broadcast of the data packet and in a predetermined frequency range if it is determined that the data packet is not successfully received, where the response information indicates at least a message that the data packet is not successfully received by any one of the at least one receiving device. The communication apparatus 600 may further include a logic circuit 620 coupled to the input/output interface 610.

It should be understood that the communication apparatus 600 in FIG. 6 can be configured to perform the processes implemented by the sending device 110 and the receiving device 120 in embodiments with reference to FIG. 2 to FIG. 5. To avoid repetition, details are not described herein again.

FIG. 7 is a block diagram of a communication apparatus 700 that may implement specific embodiments of the present disclosure. The communication apparatus 700 can be configured to implement the sending device 110 and the receiving device 120 shown in FIG. 1. The communication apparatus 700 may alternatively be implemented as a chip or a chip system. It should be understood that the communication apparatus 700 is merely used for example purposes, and does not imply any limitation on the scope of the present disclosure. Embodiments of the present disclosure may be further embodied in different devices. It should be further understood that the communication apparatus 700 may further include other elements or entities that are not shown for ease of description, but this does not mean that embodiments of the present disclosure do not have these elements or entities.

As shown in FIG. 7, the communication apparatus 700 includes a processor 710, and the processor 710 controls an operation and a function of the communication apparatus 700. For example, in some example embodiments, the processor 710 may perform various operations by using instructions 730 stored in a memory 720 coupled to the processor 710. The memory 720 may be of any proper type suitable for a local technical environment, and may be implemented by using any suitable data storage technology, including but not limited to a semiconductor-based storage device, a magnetic storage device and system, and an optical storage device and system. Although only one memory unit is shown in FIG. 7, there may be a plurality of physically different memory units in the communication apparatus 700. It should be understood that the processor 710 and the memory 720 may be disposed separately as independent components, or may be integrated together. This is not limited in this application.

The processor 710 may be any proper type suitable for a local technical environment, and may include but is not limited to one or more of a general-purpose computer, a dedicated computer, a microcontroller, a digital signal controller (Digital Signal Processor, DSP), and a controller-based multi-core controller architecture. Alternatively, the communication apparatus 700 may include a plurality of processors, for example, an application-specific integrated circuit chip that belongs to a clock synchronized with a main processor in terms of time. The processor 710 is coupled to a communication unit 740. The communication unit 740 may receive and send information by using a radio signal or through an optical fiber, a cable, and/or another component.

The memory 720 may include one or more non-volatile memories and one or more volatile memories. Examples of the non-volatile memory include, but are not limited to, a read-only memory (Read-Only Memory, ROM), an erasable programmable read-only memory (Erasable Programmable Read-Only Memory, EPROM), a flash memory, a hard disk, a compact disc (Compact Disc, CD), a digital versatile disk (Digital Versatile Disc, DVD), or another magnetic memory and/or optical memory. Examples of the volatile memory include but are not limited to a random access memory (Random Access Memory, RAM).

Embodiments of the present disclosure may be implemented by using a computer program, so that the communication apparatus 700 may perform any process discussed with reference to FIG. 2 to FIG. 5. Embodiments of the present disclosure may alternatively be implemented by using hardware or a combination of software and hardware. The computer program includes computer-executable instructions 730 executed by the processor 710. The computer program may be stored in the memory 720. The processor 710 may perform any suitable action and processing by loading a computer program into the RAM.

In the foregoing embodiments in which the sending device 110 and the receiving device 120 determine the adjustment parameters by using the machine learning algorithm modules, the reinforcement learning model, and the like, the modules and the models may be stored in the memory 720 in a manner of computer program code or the instructions 730. The processor executes the program code or the instructions in the memory 720 to enable the communication apparatus 700 to perform the processing processes implemented by the sending device 110 and the receiving device 120 in FIG. 2 to FIG. 5.

In some embodiments, the computer program may be tangibly included in a computer-readable medium, and the computer-readable medium may be included in the communication apparatus 700 (for example, in the memory 720) or another storage device that can be accessed by the communication apparatus 700. The computer program may be loaded from the computer-readable medium to a RAM for execution. The computer-readable medium may include any type of tangible non-volatile memory, such as a ROM, an EPROM, a flash memory, a hard disk, a CD, or a DVD.

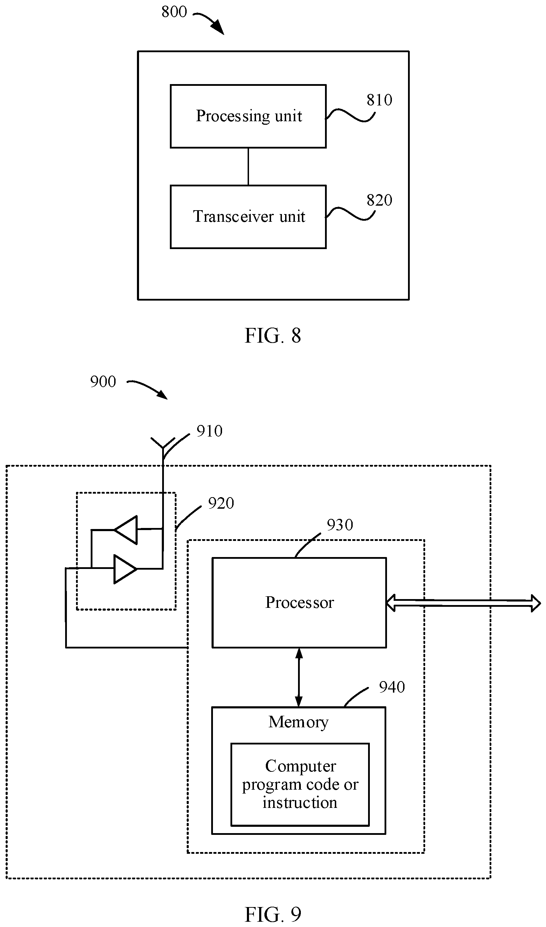

FIG. 8 is a block diagram of a communication apparatus according to an example embodiment of the present disclosure. As shown in FIG. 8, a communication apparatus 800 includes a processing unit 810 and a transceiver unit 820. The communication apparatus 800 is configured to implement functions of the sending device or the receiving device in the method embodiments shown in FIG. 4 and FIG. 5. The processing unit 810 may perform internal processing. The transceiver unit 820 may communicate with the outside. The transceiver unit 820 may also be referred to as a communication interface, an input/output interface, or the like. For example, the transceiver unit 820 may include a sending unit and a receiving unit. The sending unit is configured to perform a sending operation of the terminal device or the base station device in the foregoing method embodiments. The receiving unit is configured to perform a receiving operation of the terminal device or the base station device in the foregoing method embodiments.

When the communication apparatus 800 is configured to implement the function of the sending device 110 in the method embodiment shown in FIG. 4, the transceiver unit 820 is configured to broadcast a data packet, and retransmit the data packet if response information is obtained through detection. The processing unit 810 is configured to perform, at a predetermined time point within a time periodicity associated with the broadcasting of the data packet and in a predetermined frequency range, detection on response information fed back by at least one receiving device based on reception of the data packet. The response information indicates at least a message that the data packet is not successfully received by any one of the at least one receiving device.

When the communication apparatus 800 is configured to implement the function of the sending device 110 in the method embodiment shown in FIG. 4, the processing unit 810 is configured to perform detection on a received power level that is at the predetermined time point and in the predetermined frequency range, and determine, if determining that the received power level exceeds a threshold power level, that the response information is obtained through detection.

When the communication apparatus 800 is configured to implement the function of the sending device 110 in the method embodiment shown in FIG. 4, the processing unit 810 is configured to parse at least one another data packet received at the predetermined time point and in the predetermined frequency range, and determine detection of the response information based on a result of the parsing.

When the communication apparatus 800 is configured to implement the function of the sending device 110 in the method embodiment shown in FIG. 4, the processing unit 810 is configured to determine, if determining that a predetermined synchronization sequence code is received at the predetermined time point and in the predetermined frequency range, that the response information is received from the at least one receiving device.

When the communication apparatus 800 is configured to implement the function of the sending device 110 in the method embodiment shown in FIG. 4, the processing unit 810 is configured to stop transmission of the data packet if determining that the response information is not received at the predetermined time point and in the predetermined frequency range.

When the communication apparatus 800 is configured to implement the function of the sending device 110 in the method embodiment shown in FIG. 4, short-range wireless communication may include one of the following: Bluetooth communication, green tooth communication, mobile hotspot (Wi-Fi) communication, or Zigbee communication.

When the communication apparatus 800 is configured to implement the function of the receiving device 120 in the method embodiment shown in FIG. 5, the transceiver unit 820 is configured to receive a data packet, and send response information at a predetermined time point within a time periodicity associated with the broadcasting of the data packet and in a predetermined frequency range if it is determined that the data packet is not successfully received, where the response information indicates at least a message that the data packet is not successfully received by any one of the at least one receiving device.

For more detailed descriptions of the processing unit 810 and the transceiver unit 820, directly refer to the related descriptions in the method embodiments shown in FIG. 4 and FIG. 5. Details are not described herein.

FIG. 9 is a block diagram of a communication apparatus according to an example embodiment of the present disclosure. As shown in FIG. 9, a possible schematic diagram of a base station device or a terminal device 900 is provided, including an antenna 910, a signal transceiver unit 920, a processor 930, and a memory 940. The memory 940 is configured to store computer program code, instructions, or the like. The processor 930 is configured to execute the program or the instructions, to implement the operations of the terminal device or the base station device in the method embodiments shown in FIG. 4 and FIG. 5. It may be understood that the signal transceiver unit may be a transceiver, including a transmitter and a receiver. The transmitter may send a signal to another device, for example, a base station device or a terminal device. The receiver may receive a signal from another device, for example, a core network, a base station device, or a terminal device.

In general, the various example embodiments of the present disclosure may be implemented in hardware or dedicated circuitry, software, logic, or any combination thereof. Some aspects may be implemented in hardware, while other aspects may be implemented in firmware or software that may be executed by a controller, a microprocessor, or another computing device. When aspects of the example embodiments of the present disclosure are illustrated or described as block diagrams, flowcharts, or represented using specific other figures, it will be understood that the blocks, apparatuses, systems, techniques, or methods described herein may be implemented as non-limiting examples in hardware, software, firmware, dedicated circuitry or logic, general-purpose hardware or controllers, or other computing devices, or some combinations thereof.

For example, the example embodiments of the present disclosure may be described in the context of machine-executable or computer-executable instructions. The machine-executable instructions are, for example, a program module executed in a device included in a real or virtual processor of a target. Usually, the program module includes a routine, a program, a library, an object, a class, a component, a data structure, and the like, and executes a specific task or implements a specific abstract data structure. In various example embodiments, functions of program modules may be combined or split between the described program modules. The machine-executable instructions for the program module may be executed locally or within a distributed device. In the distributed device, the program module may be located in both a local storage medium and a remote storage medium.

Computer program code used to implement the methods disclosed in the present disclosure may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed all on a computer, partially on a computer, as an independent software package, partially on a computer and partially on a remote computer, or all on a remote computer or server.

In the context of the present disclosure, the computer program code or related data may be carried by any appropriate carrier, so that a device, an apparatus, or a processor can perform various processing and operations described above. Examples of the carrier include a signal, a computer-readable medium, and the like. For example, the signal may include propagating signals in electrical, optical, radio, sound, or other forms, such as carrier waves and infrared signals.

In the context of the present disclosure, a machine-readable medium or a computer-readable medium may be any tangible medium that includes or stores a program for or has a program related to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. More detailed examples of the machine-readable storage medium include an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

In addition, while operations are described in a particular order, this should not be understood as requiring such operations to be completed in the particular order shown or in a successive order, or performing all the illustrated operations to obtain the desired results. In some cases, multitasking or parallel processing is advantageous. Similarly, although the foregoing discussion includes specific implementation details, this should not be construed as limiting the scope of any claim, but rather as a description that may be directed to specific example embodiments. Some features described in the context of separate example embodiments in this specification may alternatively be integrated into a single example embodiment. Conversely, various features that are described in the context of a single example embodiment may alternatively be implemented separately in a plurality of example embodiments or in any suitable sub-combination.

Although the subject matter has been described in language specific to structural features and/or methodological actions, it should be understood that the subject matter defined in the appended claims is not limited to the specific features or actions described above. Rather, the specific features and actions described above are disclosed as example forms of implementing the claims.

## Claims

1. A short-range wireless communication method, comprising:
broadcasting, by a sending device, a data packet;
performing, by the sending device at a predetermined time point within a time periodicity associated with the broadcasting of the data packet and in a predetermined frequency range, detection on response information fed back by at least one receiving device based on reception of the data packet, wherein the response information indicates at least a message that the data packet is not successfully received by any one of the at least one receiving device; and
retransmitting, by the sending device, the data packet if the response information is obtained through detection.

2. The method according to claim 1, wherein the performing detection on the response information comprises:
performing detection on a received power level that is at the predetermined time point and in the predetermined frequency range; and
determining, if determining that the received power level exceeds a threshold power level, that the response information is obtained through detection.

3. The method according to claim 1, wherein the performing detection on the response information comprises:
parsing at least one another data packet received at the predetermined time point and in the predetermined frequency range; and
determining detection of the response information based on a result of the parsing.

4. The method according to claim 1, wherein the performing detection on the response information comprises:
determining, if determining that a predetermined synchronization sequence code is received at the predetermined time point and in the predetermined frequency range, that the response information is received from the at least one receiving device.

5. The method according to claim 1, further comprising:
stopping the transmission of the data packet if determining that the response information is not received at the predetermined time point and in the predetermined frequency range.

6. The method according to claim 1, wherein the short-range wireless communication may comprise one of the following:
Bluetooth communication;
green tooth communication;
mobile hotspot (Wi-Fi) communication; or
Zigbee (Zigbee) communication.

7. A short-range wireless communication method, comprising:
receiving, by a receiving device, a data packet; and
sending, by the receiving device, response information at a predetermined time point within a time periodicity associated with the broadcasting of the data packet and in a predetermined frequency range if determining that the data packet is not successfully received, wherein the response information indicates at least a message that the data packet is not successfully received by any one of at least one receiving device.

8. A short-range communication device, comprising:
a transceiver and a processor coupled to the transceiver, wherein
the processor is configured to perform the method according to any one of claims 1 to 6.

9. A short-range communication device, comprising:
a transceiver and a processor coupled to the transceiver, wherein
the processor is configured to perform the method according to claim 7.

10. A short-range communication device, comprising:
a transceiver, configured to broadcast a data packet and retransmit, by the sending device, the data packet if response information is obtained through detection; and
a processor, coupled to the transceiver, and configured to:
perform, by the sending device at a predetermined time point within a time periodicity associated with the broadcasting of the data packet and in a predetermined frequency range, detection on response information fed back by at least one receiving device based on reception of the data packet, wherein the response information indicates at least a message that the data packet is not successfully received by any one of the at least one receiving device.

11. A short-range communication device, comprising:
a processor; and
a transceiver, coupled to the processor, and configured to:
receive a data packet; and
send, by the receiving device, response information at a predetermined time point within a time periodicity associated with the broadcasting of the data packet and in a predetermined frequency range if it is determined that the data packet is not successfully received, wherein the response information indicates at least a message that the data packet is not successfully received by any one of at least one receiving device.

12. A computer-readable storage medium, storing computer-executable instructions; and when the computer-executable instructions are executed by a processor, the processor is enabled to perform the method according to any one of claims 1 to 6 or the method according to claim 7.
